# FASCICULE DE BREVET EUROPEEN

(11) **EP 2 060 105 B1**
(45) Date de publication et mention de la délivrance du brevet: **29.11.2017**
(21) Numéro de dépôt: 07823794.8
(22) Date de dépôt: 10.09.2007
(51) Int. Cl.: H04M 7/00, H04M 3/436, H04L 29/06

(54) **PROCÉDÉ ET SERVEUR DE NOTIFICATION D'UN APPEL DANS UN RÉSEAU**
VERFAHREN UND SERVER ZUR BENACHRICHTIGUNG EINER VERBINDUNG IN EINEM NETZWERK
METHOD AND SERVER FOR NOTIFYING A CALL IN A NETWORK

(30) Priorité: 11.09.2006 FR 0653658
(43) Date de publication de la demande: 20.05.2009
(73) Titulaire: Orange, 75015 Paris (FR)
(72) Inventeur: BOUILLE, Philippe, 22560 Pleumeur-Bodou (FR); TOUTAIN, François, 22700 Louannec (FR); COLLIN, Guillaume, 22290 Goudelin (FR)
(86) Numéro de dépôt international: PCT/FR2007/051898
(87) Numéro de publication internationale: WO 2008/031976

(56) Documents cités:
- WO-A-01/78360
- WO-A-02/082729
- WO-A-2006/043135
- US-A1- 2002 146 105

## Description

### Arrière-plan de l'invention

L'invention se situe dans le domaine des services de communication intégrés fixes mobiles.

Elle permet de notifier à un terminal mobile d'un utilisateur l'existence d'un appel en cours d'établissement sur un terminal fixe propre à ce même utilisateur.

On connaît principalement deux méthodes pour notifier à un terminal mobile l'arrivée d'un appel sur un terminal fixe.

La première de ces méthodes utilise le protocole SMS (Short Message Service).

De façon connue, le SMS est un mécanisme "store and forward" permettant de stocker un message dans le réseau (en l'occurrence dans un SMSC (Short Message Service Center)) lorsque le destinataire n'est pas disponible.

Le protocole SMS est un protocole asynchrone, non prévu pour le temps réel, à la fois en raison de l'architecture du réseau et des clients SMS installés dans les terminaux.

En conséquence, la notification SMS précitée nécessite plusieurs secondes.

La deuxième méthode connue repose sur le protocole IM (Instant Messaging) en mode session.

Selon cette méthode, un serveur SIP (Session Initiation Protocol) associé à la logique de service établit une session d'Instant Messaging avec le terminal mobile.

Une fois la session établie, il peut envoyer le message de notification au mobile en envoyant un message, en mode session.

De façon connue, le mode d'Instant Messaging en mode session nécessite d'établir au préalable une session, à la fois dans le plan de la signalisation SIP (échange de messages INVITE/ACK/200 OK) et dans le plan média, par exemple au moyen du protocole MSRP.

En pratique, la notification selon le protocole SIP en mode session, comme c'est décrit dans la demande internationale WO 2006/043135 publiée le 27 avril 2006, nécessite une quarantaine de messages. Elle est donc lente à mettre en oeuvre et monopolise une session en permanence dans le réseau et dans les terminaux.

Pour plus d'informations sur la complexité de la mise en oeuvre de l'Instant Messaging en mode session, l'homme du métier pourra se reporter à la spécification de référence 3GPP TS 24.227 au paragraphe A.4.2.1.

### Objet et présumé de l'invention

Selon un premier aspect, l'invention concerne un procédé de transmission tel que défini dans la revendication 1.

Corrélativement, l'invention concerne un serveur tel que défini dans la revendication 3.

Conformément à l'invention, on utilise un canal de signalisation permanent vers le terminal mobile, la notification d'un appel en cours d'établissement sur le terminal fixe se faisant par l'envoi d'un message dans ce canal de signalisation en dehors de tout contexte de session.

Autrement dit, cette notification se fait en mode "pager".

En conséquence, la notification se fait en quasi-temps réel sur le terminal mobile.

De façon avantageuse, le procédé de notification selon l'invention ne mobilise pas une session de service en permanence dans le réseau et dans les terminaux.

Dans un mode particulier de réalisation, le canal de signalisation permanent est établi entre le terminal mobile et un réseau IMS (IP Multimedia Subsystem).

Dans un mode particulier de réalisation de l'invention, le canal de signalisation précité est un canal de signalisation SIP, le lien d'utilisation permanent étant établi par un message SIP REGISTER.

Dans un mode particulier de réalisation de l'invention, le message de notification est un message SI P de type SI P MESSAGE.

Dans une variante de l'invention, le message de notification est un message SIP de type SIP NOTIFY. Dans ce cas, les terminaux mobiles souhaitant recevoir la notification doivent souscrire à l'application d'une notification par l'intermédiaire d'un message de type SIP SUBSCRIBE.

Dans un mode particulier de réalisation de l'invention, le procédé comporte une étape préliminaire de positionnement de critères de déclenchement permettant de superviser l'appel en cours d'établissement sur le terminal fixe.

Cette étape préliminaire permet avantageusement d'aiguiller la signalisation des messages arrivant sur le terminal fixe vers un serveur hébergeant la logique de service, ce serveur notifiant le terminal mobile.

Dans un mode particulier de réalisation, les différentes étapes du procédé de transmission sont déterminées par des instructions de programmes d'ordinateurs.

En conséquence, l'invention vise aussi un programme d'ordinateur sur un support d'informations, ce programme étant susceptible d'être mis en oeuvre dans un serveur ou plus généralement dans un ordinateur, ce programme comportant des instructions adaptées à la mise en oeuvre des étapes d'un procédé de transmission tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Dans une variante de réalisation, on peut aussi dénotifier le terminal mobile, dans le canal de signalisation, et en dehors de tout contexte de session, pour lui indiquer que l'appel a été pris par le terminal fixe ou par un autre terminal mobile.

### Brève description des dessins

D'autres caractéristiques et avantages de la présente invention ressortiront de la description faite ci-dessous, en référence aux dessins et aux annexes qui en illustrent un exemple de réalisation dépourvu de tout caractère limitatif. Sur les figures :
- la figure 1 représente, dans son environnement, un serveur selon l'invention dans un mode particulier de réalisation de l'invention ;
- la figure 2 représente l'établissement des couches de signalisation dans un mode particulier de réalisation de l'invention ;
- la figure 3 représente, sous forme d'organigramme, les principales étapes d'un procédé de transmission selon l'invention dans un mode particulier de réalisation ; et
- les figures 4A et 4B représentent des échanges de messages dans deux variantes de réalisation de l'invention.

Les Annexes A et B donnent des exemples de messages de notification utilisés dans les deux variantes précitées de l'invention.

### Description détaillée d'un mode de réalisation

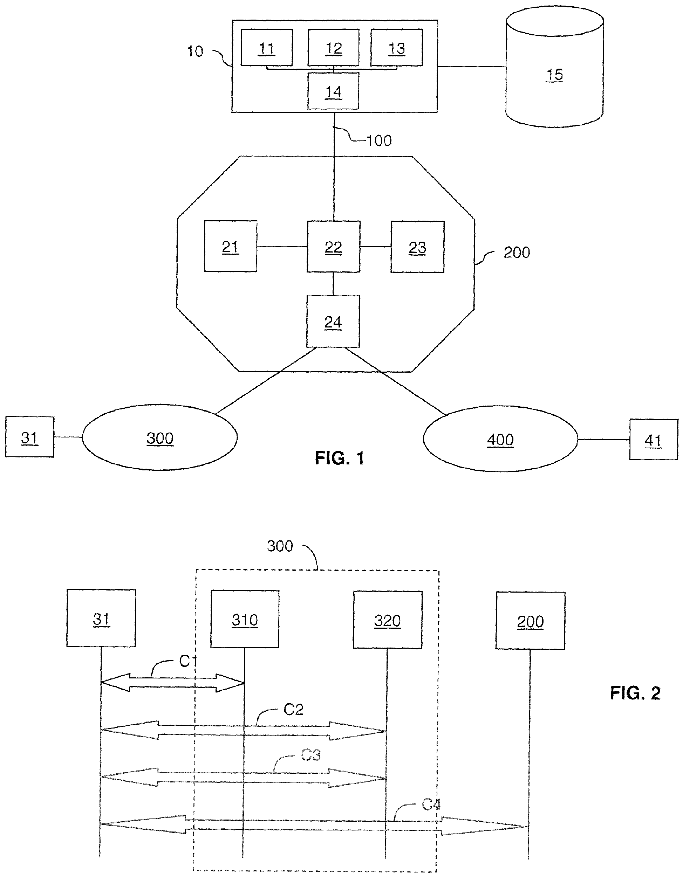

La figure 1 représente un serveur 10 conforme à l'invention dans son environnement.

Ce serveur 10 comporte l'architecture matérielle d'un ordinateur conventionnel. Il comporte en particulier un processeur 11, une mémoire morte de type ROM 12, une mémoire vive de type RAM 13 et des moyens de communication 14.

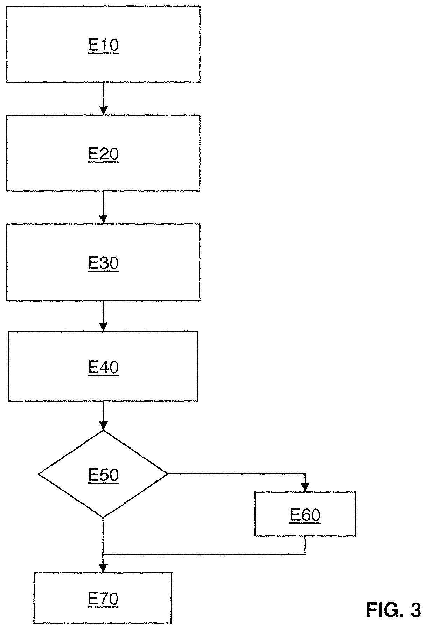

La mémoire morte de type 12 contient un programme d'ordinateur conforme à l'invention pour la mise en oeuvre du procédé de transmission dont les principales étapes sont données à l'organigramme de la figure 3.

A la figure 1, on a référencé 200 un réseau IMS.

Dans le mode de réalisation décrit ici, le serveur 10 est relié au réseau IMS 200 par une interface ISC (IP Multimedia Subsystem Service Control Interface).

De façon connue, le réseau IMS 200 comporte principalement trois serveurs de contrôle de la signalisation SI P, à savoir :
- un serveur I-CSCF référencé 21 ;
- un serveur P-CSCF référencé 24 ; et
- un serveur S-CSCF référencé 22.

Le réseau IMS 200 comporte également une entité HLR (Home Location Register) référencée 23.

Dans l'exemple de la figure 1, on référencé respectivement 300 et 400 un réseau mobile et un réseau fixe.

De façon connue, l'interface entre chacun de ces réseaux mobile 300, fixe 400 et le réseau IMS 200 est de type Mw.

A la figure 1, on a référencé 41 le terminal fixe d'un utilisateur "bob", connecté au réseau fixe 400 et 31 un terminal mobile de l'utilisateur "bob" connecté au réseau mobile 300.

On supposera
- que l'adresse SIP du terminal mobile 31 est bob mobile1 @ims.ft.com ;
- que l'adresse SIP du terminal fixe 41 est bob fixed@ims.ft.com; et
- que l'adresse SIP du serveur 10 selon l'invention est serveur10@ims.ft..com

Dans l'exemple de réalisation décrit ici, le serveur 10 est apte à accéder à une base de données 15 qui associe les adresses du terminal fixe 41 et du terminal mobile 31 de l'utilisateur bob.

En référence à la figure 2, nous allons maintenant décrire l'établissement des couches de signalisation en dessous du protocole SIP dans cet exemple de réalisation.

Lorsque le terminal mobile 31 est allumé et dans un état de repos, il doit, pour se connecter à l'IMS, établir un "PDP context" pour la signalisation SI P.

Afin d'établir ce PDP context, il doit au préalable effectuer une connexion au réseau mobile 300.

Dans l'exemple décrit ici, on supposera que le réseau mobile 300 est conforme à la norme UMTS, et on référence respectivement 310 et 320 le réseau d'accès UTRAN et le réseau coeur.

Dans cet exemple de réalisation, le terminal mobile 31 effectue une connexion RRC (Radio Resource Control Protocol), référencée C1, selon la norme 3GPP TS 25.331 paragraphe 8.1.3.

Pour ce faire, le mobile 31 envoie un message "RRC Connection Request" au composant RNC et reçoit en retour un message "RRC Connection Setup".

Le mobile passe alors dans l'état "CELL_DCH" et émet, vers l'entité RNC, un message RRC Connection Complete.

Une fois la connexion RRC établie, le terminal mobile 31 initialise une procédure d'attachement GPRS référencée C2, dite "GPRS Attached Procedure", conforme à la norme 3GPP TS 23.060 paragraphe 6.5 afin d'accéder au service et au réseau GPRS.

Pour ce faire, le terminal mobile envoie un message "GMM Attached Request" vers le réseau paquet coeur 320 de l'UMTS 300, en l'occurrence vers l'entité SGSCN, et reçoit en retour le message "GMM Attached Accept".

Le mobile 31 envoie alors le message "GMM Attached Complete" terminant ainsi la procédure d'attachement au GPRS.

Ensuite, le terminal 31 active un PDP context selon la norme 3GPP TS 23.060 paragraphe 9.2 afin de pouvoir véhiculer la signalisation SI P.

L'activation du PDP context est symbolisée par la référence C3 de la figure 2.

Pour ce faire, le terminal mobile envoie un message "Activate PDP Context Request" vers l'entité GGSN (via le SGSN) du réseau paquet coeur 320, en demandant dans le paramètre "Requested QOS" une qualité de service pour la signalisation "Signaling Indication" conformément à la norme 3GPP TS 23.207.

Le terminal mobile 31 reçoit ainsi, dans le réseau radio et le réseau paquet, un traitement préférentiel permettant de garantir un temps de transfert minimum.

Le terminal mobile reçoit en retour le message "Activate PDP Context Accept".

Le terminal mobile 31 est alors dans un état "GPRS Attached Always On" ainsi qu'en mode "PDP context Always On".

Le lien de signalisation permanent établi entre le terminal mobile 10 et le réseau IMS est référencé 100 à la figure 1.

Le mode "IMS Registration Performed" est effectué par l'envoi d'un message SIP Register par le terminal 31 vers l'IMS 200, représenté de façon symbolique par la double flèche référencée C4.

En référence à la figure 3, nous allons maintenant décrire les principales étapes du procédé de transmission selon l'invention mis en oeuvre par le serveur 10.

Au cours d'une étape préliminaire E10, le serveur 22 positionne, dans le réseau IMS 200, des critères de déclenchement permettant de superviser les appels à destination du terminal fixe 41.

Ces critères de déclenchement sont définis dans la spécification 3GPP TS 23.228.

Ce positionnement a pour conséquence que les messages SIP INVITE générés dans le cas d'un appel au terminal fixe 41 provoquent un déclenchement, ces messages SIP INVITE étant remontés par le serveur 22 au niveau du serveur 10 conforme à l'invention.

L'étape E10 de positionnement est suivie par l'étape E20 de création du canal permanent 100 déjà décrite.

On supposera qu'au cours d'une étape E30, le serveur 10 détecte un message SIP INVITE sur l'interface ISC.

Consécutivement à cette détection, le serveur 10 interroge, au cours d'une étape E40, la base de données 15 qui contient la liste des terminaux mobiles 31 associés au terminal fixe 41.

La base de données 15 peut notamment être de type LDAP et interrogée selon les procédés connus de l'homme du métier.

L'application obtient, de la base de données 15, la liste des numéros téléphoniques mobiles associés à la ligne fixe et qu'il convient de notifier.

Dans l'exemple de réalisation décrit ici, le procédé de transmission selon l'invention comporte une étape E50 au cours de laquelle le serveur 10 détermine si une temporisation doit être respectée avant la notification.

Si tel est le cas, cette temporisation est effectuée au cours d'une étape E60.

La notification proprement dite est effectuée au cours d'une étape E70 par l'envoi d'un message de notification dans le canal de signalisation 100 établi à l'étape E20.

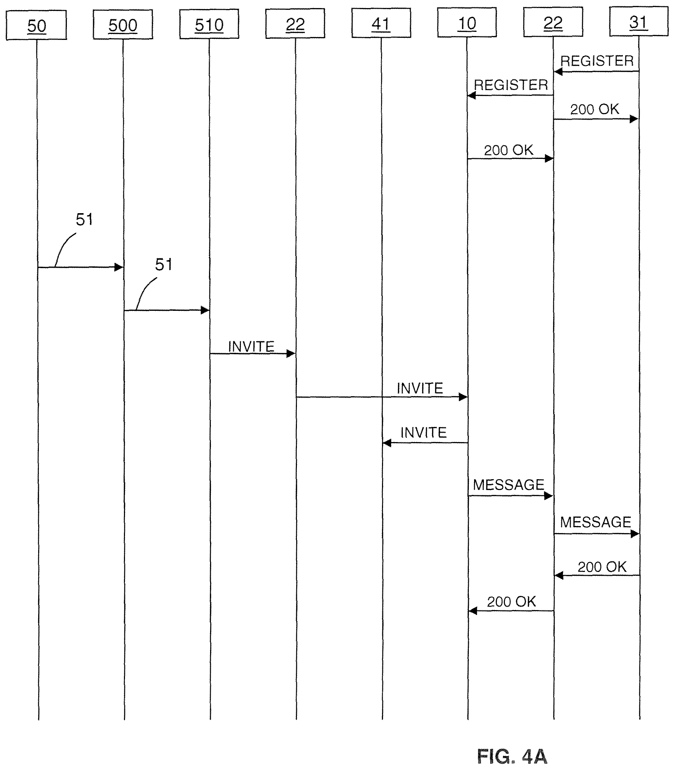

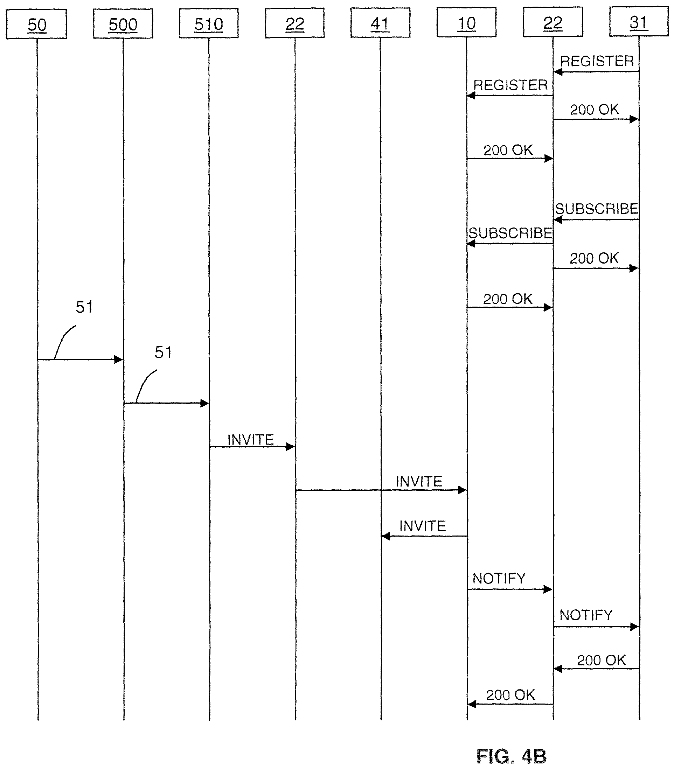

Nous allons maintenant décrire, en référence aux figures 4A et 4B, des échanges de messages conformes à deux variantes de réalisation de l'invention.

A la figure 1, on représente tout d'abord, dans la partie droite de la figure, l'établissement du canal SIP permanent qui se fait par l'envoi d'un message d'enregistrement REGISTER du terminal mobile 31 vers l'entité S-CSCF 22 de ce terminal mobile, ce message d'enregistrement étant relayé par cette entité 22 vers le serveur 10 conforme à l'invention.

De façon connue, ces messages sont acquittés par des messages de type 200 OK.

Une fois le canal 100 de signalisation SIP établi, on considère qu'un terminal appelant 50 émet un appel 51 vers son réseau 500, cet appel 51 étant relayé par une passerelle 510 adaptée à générer un message SIP INVITE vers l'entité S-CSCF 22 du terminal fixe 41.

Sur réception de ce message INVITE, l'entité S-CSCF 22 du terminal fixe 41 relaie le message INVITE à destination du serveur 10.

Ce message INVITE est reçu et détecté par le serveur 10 au cours de l'étape E30 du procédé de notification déjà décrit.

Dans l'exemple décrit ici, le serveur 10 relaie ce message INVITE vers le client fixe 41, afin de le faire sonner.

Puis, au cours de l'étape E70 de notification, le serveur 10 selon l'invention envoie le message SIP Message à destination de l'entité 22 S-CSCF du terminal mobile 31, ce message étant relayé par l'entité 22 à destination du terminal mobile 31 ainsi notifié.

Ces messages SI P Message sont acquittés par des messages de type 200 OK

Le message de notification SI P dans cette première variante de réalisation est donné à titre d'exemple à l'Annexe A.

La figure 4B représente l'échange de messages dans une deuxième variante de réalisation de l'invention.

Dans cette variante de réalisation, on utilise le message SIP NOTI FY pour notifier le terminal mobile 31.

L'enregistrement préalable du mobile 31 (message SIP REGI STER) est encore nécessaire.

Le message SIP SUBSCRIBE contient alors le paramètre "Event" permettant, conformément au RFC 3265, de préciser qu'il s'agit d'une souscription à l'application selon l'invention. La méthode SUBSCRIBE contient également l'adresse SIP du serveur d'application (serveur10@ims.ft.com).

Dans cette deuxième variante de réalisation, il n'est plus nécessaire de consulter la base de données 15 pour connaître la liste des terminaux mobiles à notifier, ceux-ci étant connus grâce à la souscription précitée.

Tout comme dans la variante précédente, un appel entrant sur le terminal fixe 41 est relayé par l'IMS 200 vers le serveur d'application 10 selon l'invention (message SIP INVITE), les critères de déclenchement adéquats ayant été positionnés.

Le serveur d'application 10 selon l'invention fait sonner le terminal fixe 41 et notifie, par le message SIP NOTIFY, les mobiles 31 qui se sont au préalable enregistrés.

Ce message NOTI FY est donné à titre d'exemple à l'Annexe B.

Il contient la référence de l'application, le numéro du terminal fixe appelé ainsi que le numéro de l'appelant 50.

Dans la description précédente, seul un terminal mobile 31 de l'utilisateur Bob a été notifié.

En variante, plusieurs terminaux mobiles peuvent être notifiés.

### ANNEXE A

PMESSAGE sip:bob_mobile1@ims.ft.com SIP/2.0
From: sip:serveur10@ims.ft.com
To: sip:bob_mobile1@ims.ft.com
Call-ID: asd88asd77a@1.2.3.4
CSeq: 1 MESSAGE
Content-Type: text/plain
Content-Length: 100

### ANNEXE B

MESSAGE sip:bob_mobile1@ims.ft.com SIP/2.0
To: <sip:bob_mobile1@ims.ft.com> ;tag=78923
From: <sip:serveur10@ims.ft.com> ;tag=4442

Call-Id: 1349882@1.2.3.4
CSeq: 20 NOTIFY
Contact: <sip:bob@serveur10.com>
Event: notification-immédiate-convergente
Subscription-State: active
Content-Type: application/notification-immédiate-convergente
Content-Length: 100
Appel-fixe: yes
Fixed-Phone-Account:sip:bob_fixed@ims.ft.com
Caller-I D: 0296123456

## Revendications

1. Procédé de transmission comportant :
- une étape (E20) de création, suite à un enregistrement d'au moins un terminal mobile auprès d'un serveur, d'un canal de signalisation (100) permanent vers au moins un terminal mobile enregistré (31) d'un utilisateur ;
- une étape (E30) de détection, par le serveur, d'un appel en cours d'établissement vers un terminal fixe (41) dudit utilisateur ; et
- sur détection (E30) dudit appel, une étape (E70) d'envoi, audit au moins un terminal mobile (31), d'un message de notification dans ledit canal de signalisation (100) en dehors d'un contexte de session.

2. Procédé de transmission selon la revendication 1, **caractérisé en ce qu'**il comporte une étape préliminaire (E10) de positionnement de critères de déclenchement permettant de superviser ledit appel.

3. Serveur (10) comportant :
- des moyens de création apte à créer, suite à un enregistrement d'au moins un terminal mobile, un canal de signalisation (100) permanent vers au moins un terminal mobile (31) d'un utilisateur
- des moyens (11) de détection d'un appel en cours d'établissement vers un terminal fixe (41) dudit utilisateur ; et
- des moyens (14) d'envoi, audit au moins un terminal mobile, d'un message de notification dans ledit canal de signalisation en dehors d'un contexte de session.

4. Programme d'ordinateur comportant des instructions pour l'exécution des étapes du procédé de notification selon la revendication 1 ou 2 lorsque ledit programme est exécuté par un ordinateur.

5. Support d'enregistrement (12) lisible par un ordinateur (10) sur lequel est enregistré un programme d'ordinateur comprenant des instructions pour l'exécution des étapes du procédé de notification selon la revendication 1 ou 2.

## Patentansprüche

1. Übertragungsverfahren, welches umfasst:
- einen Schritt (E20) der Erzeugung, im Anschluss an eine Anmeldung wenigstens eines mobilen Endgerätes an einem Server, eines permanenten Signalisierungskanals (100) zu wenigstens einem angemeldeten mobilen Endgerät (31) eines Benutzers;
- einen Schritt (E30) der Erkennung, durch den Server, einer im Aufbau befindlichen Verbindung zu einem festen Endgerät (41) des Benutzers; und
- bei Erkennung (E30) der Verbindung einen Schritt (E70) des Sendens, an das wenigstens eine mobile Endgerät (31), einer Benachrichtigungsnachricht in dem Signalisierungskanal (100) außerhalb eines Sitzungskontextes.

2. Übertragungsverfahren nach Anspruch 1, **dadurch gekennzeichnet, dass** es einen vorausgehenden Schritt (E10) der Festlegung von Auslösekriterien umfasst, der es ermöglicht, die Verbindung zu überwachen.

3. Server (10), welcher aufweist:
- Erzeugungsmittel, welche geeignet sind, im Anschluss an eine Anmeldung wenigstens eines mobilen Endgerätes einen permanenten Signalisierungskanal (100) zu wenigstens einem mobilen Endgerät (31) eines Benutzers zu erzeugen;
- Mittel (11) zur Erkennung einer im Aufbau befindlichen Verbindung zu einem festen Endgerät (41) des Benutzers; und
- Mittel (14) zum Senden, an das wenigstens eine mobile Endgerät, einer Benachrichtigungsnachricht in dem Signalisierungskanal außerhalb eines Sitzungskontextes.

4. Computerprogramm, welches Anweisungen zur Ausführung der Schritte des Benachrichtigungsverfahrens nach Anspruch 1 oder 2, wenn das Programm von einem Computer ausgeführt wird, umfasst.

5. Von einem Computer (10) lesbares Aufzeichnungsmedium (12), auf welchem ein Computerprogramm aufgezeichnet ist, das Anweisungen zur Ausführung der Schritte des Benachrichtigungsverfahrens nach Anspruch 1 oder 2 umfasst.

## Claims

1. Transmission method including:
- a step (E20) of creation, following registration of at least one mobile terminal with a server, of a permanent signalling channel (100) to at least one registered mobile terminal (31) of a user;
- a step (E30) of detection, by the server, of a call undergoing setup to a fixed terminal (41) of said user; and
- upon detection (E30) of said call, a step (E70) of sending, to said at least one mobile terminal (31), a notification message in said signalling channel (100) outside of a session context.

2. Transmission method according to Claim 1, **characterized in that** it includes a preliminary step (E10) of positioning triggering criteria making it possible to monitor said call.

3. Server (10) including:
- creation means able to create, following registration of at least one mobile terminal, a permanent signalling channel (100) to at least one mobile terminal (31) of a user;
- means (11) for detecting a call undergoing setup to a fixed terminal (41) of said user; and
- means (14) for sending, to said at least one mobile terminal, a notification message in said signalling channel outside of a session context.

4. Computer program including instructions for executing the steps of the notification method according to Claim 1 or 2 when said program is executed by a computer.

5. Recording medium (12) able to be read by a computer (10) and on which a computer program comprising instructions for executing the steps of the notification method according to Claim 1 or 2 is recorded.
